# EUROPEAN PATENT APPLICATION

(11) **EP 4 601 150 A1**
(43) Date of publication of application: **13.08.2025**
(21) Application number: 24196668.8
(22) Date of filing: 27.08.2024
(51) Int. Cl.: H02J 7/00

(54) **CONTROL METHOD FOR POWER SUPPLY CIRCUIT, VEHICLE, AND STORAGE MEDIUM**

(30) Priority: 07.02.2024 CN 202410175916
(71) Applicant: Xiaomi EV Technology Co., Ltd., Beijing 100176 (CN)
(72) Inventor: LI, Mingyuan, Beijing 100176 (CN); REN, Deqiang, Beijing 100176 (CN)
(74) Representative: Stöckeler, Ferdinand

(57) **Abstract**

A control method for a power supply circuit, a control device for a power supply circuit, a vehicle, and a storage medium are provided. The power supply circuit includes a first battery pack and a second battery pack. The method includes: obtaining (S11) a voltage difference between the first battery pack and the second battery pack; determining (S12) a target control strategy corresponding to the voltage difference; and controlling (S13) a direct current (DC) converter of the power supply circuit to output a corresponding power according to the target control strategy.

## Description

### FIELD

The present invention relates to the field of power supply, and more particularly to a control method for a power supply circuit, a vehicle, and a storage medium.

### BACKGROUND

With the development of the automotive technology, an electric vehicle is gradually becoming popular, and the high-level assisted driving technology is also gradually applied. The electric vehicle usually contains an onboard high voltage power grid for driving the vehicle and a low voltage power grid for controlling the vehicle, lighting, entertainment, and other functions. The high voltage power grid and the low voltage power grid both belong to a power supply circuit. Therefore, how to better control the power supply circuit is a technical problem that needs to be solved urgently.

### SUMMARY

To overcome the problem in the related art, the present invention provides a control method for a power supply circuit, a vehicle, and a storage medium.

According to a first aspect of embodiments of the present invention, a control method for a power supply circuit is provided, the power supply circuit includes a first battery pack and a second battery pack, and the method includes: obtaining a voltage difference between the first battery pack and the second battery pack; determining a target control strategy corresponding to the voltage difference; and controlling a direct current (DC) converter of the power supply circuit to output a corresponding power according to the target control strategy.

Optionally, the DC converter includes a first DC converter and a second DC converter, and controlling the first DC converter and the second DC converter to collaboratively output power according to the first control strategy includes: in case that a voltage of the first battery pack is greater than a voltage of the second battery pack, controlling the first DC converter to output a first power and controlling the second DC converter to output a second power, wherein the first power is greater than the second power; or, in case that a voltage of the first battery pack is less than a voltage of the second battery pack, controlling the first DC converter to output a first power and controlling the second DC converter to output a second power, wherein the first power is less than the second power.

Optionally, determining the target control strategy corresponding to the voltage difference includes: determining that the voltage difference between the first battery pack and the second battery pack is within a second preset range, and obtaining a second control strategy corresponding to the second preset range, wherein the second preset range is greater than the first preset range; and controlling the DC converter of the power supply circuit to output the corresponding power according to the target control strategy includes: controlling one of the first DC converter and the second DC converter to output the corresponding power according to the second control strategy, and controlling the other one of the first DC converter and the second DC converter to be in a standby state.

Optionally, the DC converter includes a first DC converter and a second DC converter, and controlling one of the first DC converter and the second DC converter to output the corresponding power according to the second control strategy, and controlling the other one of the first DC converter and the second DC converter to be in the standby state includes: determining that a first voltage of the first battery pack is greater than a second voltage of the second battery pack and that the voltage difference between the first battery pack and the second battery pack is within the second preset range, controlling the first DC converter to output the corresponding power, and controlling the second DC converter to be in the standby state; or, determining that a first voltage of the first battery pack is less than a second voltage of the second battery pack and that the voltage difference between the first battery pack and the second battery pack is within the second preset range, controlling the second DC converter to output the corresponding power, and controlling the first DC converter to be in the standby state.

Optionally, the DC converter includes a first DC converter and a second DC converter, and determining the target control strategy corresponding to the voltage difference includes: determining that the voltage difference between the first battery pack and the second battery pack is within a third preset range, and obtaining a third control strategy corresponding to the third preset range, where the third preset range is greater than the second preset range; and controlling the DC converter of the power supply circuit to output the corresponding power according to the target control strategy includes: determining a target DC converter from one of the first DC converter and the second DC converter based on the third control strategy, controlling the target DC converter to output the corresponding power, and controlling the target DC converter to charge the first battery pack or the second battery pack corresponding to the other one of the first DC converter and the second DC converter.

Optionally, determining the target DC converter from one of the first DC converter and the second DC converter based on the third control strategy, controlling the target DC converter to output the corresponding power, and controlling the target DC converter to charge the first battery pack or the second battery pack corresponding to the other one of the first DC converter and the second DC converter, includes: determining that a first voltage of the first battery pack is greater than a second voltage of the second battery pack, and that the voltage difference between the first battery pack and the second battery pack is within the third preset range, using the first DC converter as the target DC converter, controlling the first DC converter to output the corresponding power, and controlling the first DC converter to charge the second battery pack corresponding to the second DC converter; or, determining that a first voltage of the first battery pack is less than a second voltage of the second battery pack, and that the voltage difference between the first battery pack and the second battery pack is within the third preset range, using the second DC converter as the target DC converter, controlling the second DC converter to output the corresponding power, and controlling the second DC converter to charge the first battery pack corresponding to the first DC converter.

According to a second aspect of embodiments of the present invention, a control device for a power supply circuit is provided, and the device includes: an obtaining module configured to obtain a voltage difference between a first battery pack and a second battery pack of the power supply circuit; a determination module configured to determine a target control strategy corresponding to the voltage difference; and a control module configured to control a direct current (DC) converter of the power supply circuit to output a corresponding power according to the target control strategy.

According a third aspect of embodiments of the present invention, a vehicle is provided, and the vehicle includes: a processor; and a memory for storing instructions executable by the processor. The processor is configured to perform the method according to the first aspect of the present invention when executing the instructions.

According a fourth aspect of embodiments of the present invention, a computer readable storage medium is provided, on which computer program instructions are stored. The program instructions are configured to implement steps of the control method for the power supply circuit according to the first aspect of the present invention when executed by a processor.

According a fifth aspect of embodiments of the present invention, a computer program product is provided, including computer programs/instructions. The computer programs/instructions are configured to implement steps of the control method for the power supply circuit according to the first aspect of the present invention when executed by a processor.

By controlling the power output by the DC converter of the power supply circuit based on the target control strategy, the present invention may flexibly and effectively achieve the energy balance of the battery packs. Specifically, the voltage difference between the first battery pack and the second battery pack is obtained. Based on this, the target control strategy corresponding to the voltage difference is determined, and the DC converter of the power supply circuit is controlled to output the corresponding power according to the target control strategy. In this way, the balance problem of high voltage battery pack grouping can be solved.

It should be understood that both the forgoing general descriptions and the following detailed descriptions are illustrative and explanatory only, and are not restrictive of the present invention.

### BRIEF DESCRIPTION OF THE DRAWINGS

The drawings herein are incorporated into the specification and form a part of the specification, show embodiments that comply with the present invention, and are used to explain the principles of the present invention together with the specification.
Fig. 1 is a flow chart of a control method for a power supply circuit according to an illustrative embodiment.
Fig. 2 is a schematic diagram of a power supply circuit in a control method for a power supply circuit according to an illustrative embodiment.
Fig. 3 is a flow chart of another control method for a power supply circuit according to an illustrative embodiment.
Fig. 4 is a schematic diagram of two direct current (DC) converters taking power and supplying power respectively in another control method for a power supply circuit according to an illustrative embodiment.
Fig. 5 is a schematic diagram of a first direct current (DC) converter taking power and supplying power in another control method for a power supply circuit according to an illustrative embodiment.
Fig. 6 is a schematic diagram of a second direct current (DC) converter taking power and supplying power in another control method for a power supply circuit according to an illustrative embodiment.
Fig. 7 is a schematic diagram of a first direct current (DC) converter taking power and supplying power, and charging a second DC converter in another control method for a power supply circuit according to an illustrative embodiment.
Fig. 8 is a schematic diagram of a second direct current (DC) converter taking power and supplying power, and charging a first DC converter in another control method for a power supply circuit according to an illustrative embodiment.
Fig. 9 is a block diagram of a control device for a power supply circuit according to an illustrative embodiment.
Fig. 10 shows a block diagram of functions of a vehicle according to an illustrative embodiment.

### DETAILED DESCRIPTION

Illustrative embodiments are described in detail here, examples of which are shown in the accompanying drawings. When the following description refers to the accompanying drawings, unless specified or limited otherwise, the same numbers in different accompanying drawings indicate the same or similar elements. The implementations described in the following illustrative embodiments do not represent all possible implementations consistent with the present invention. Rather, they are only examples of devices and methods that are consistent with some aspects of the present invention as detailed in the attached claims.

Terms such as "first" and "second" used in the description of the present invention are used to distinguish similar objects, rather than being understood as a specific order or sequence. In addition, unless otherwise expressly defined, in the description with reference to the accompanying drawings, the same number in different drawings represents the same element.

In embodiments of the present invention, although operations or steps are described in a particular order in the drawings, it should not be construed as requiring that the operations or the steps be performed in the particular or serial order as shown, or that all the operations or the steps shown be performed to obtain a desired result. In embodiments of the present invention, these operations or steps may be performed serially, or these operations or steps may also be performed in parallel, or part of these operations or steps may also be performed.

In the related art, a vehicle may be equipped with a redundant low voltage power grid, which may enable the vehicle's safety related apparatuses such as braking, steering, and lighting apparatuses to achieve a dual-grid redundant power supply, thereby improving the vehicle safety.

In some embodiments, a power supply circuit of the vehicle may include a first battery pack and a second battery pack, and when any one of the first battery pack and the second battery pack fails, power may be supplied through the other unfaulty battery pack. However, due to factors such as uneven charging, uneven battery aging, uneven use, or temperature effects of the first battery pack and the second battery pack, it will cause remaining capacities in the first battery pack and the second battery pack to be unbalanced, and further result in a decrease of the vehicle's endurance mileage and instability of the charging process.

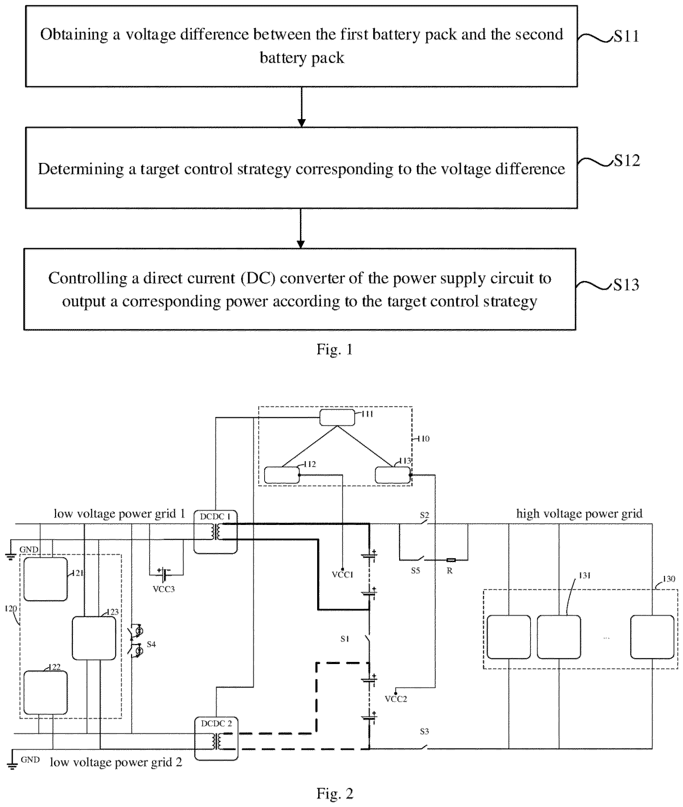

Fig. 1 is a flow chart of a control method for a power supply circuit according to an illustrative embodiment. As shown in Fig. 1, the method may include the following steps.

In step S11, a voltage difference between a first battery pack and a second battery pack is obtained.

In an embodiment of the present invention, a structure of the power supply circuit may be shown in Fig. 2, and it is known from Fig. 2 that the power supply circuit may include a first battery pack VCC1, a second battery pack VCC2, a controller 110, a low voltage load 120, and a high voltage load 130.

The first battery pack VCC1 and the second battery pack VCC2 each may be a high voltage battery pack, that is, the first battery pack VCC1 and the second battery pack VCC2 may be a power battery in the vehicle. In addition, the first battery pack VCC1 and the second battery pack VCC2 may be configured to supply power to the low voltage load 120 in a low voltage power grid, as well as to supply power to the high voltage load 130 in a high voltage power grid.

In some embodiments, a breaking device S1 may be connected between the first battery pack VCC1 and the second battery pack VCC2. The breaking device S1 may be any one of a fuse or a safety switch, and the safety switch refers to a pyrotechnical switch or an intelligent fuse. Here, the breaking device S1 may be configured to be switched off when the vehicle is asleep or when the high voltage power grid fails. When the breaking device S1 is switched on, a negative electrode of the first battery pack VCC1 is connected to a positive electrode of the second battery pack VCC2, and the first battery pack VCC1 and the second battery pack VCC2 form an integral high voltage battery pack. When the breaking device S1 is switched off, the negative electrode of the first battery pack VCC1 and a negative electrode of the second battery pack VCC2 are grounded, respectively, and the first battery pack VCC1 and the second battery pack VCC2 are two independent high voltage battery packs.

In an embodiment of the present invention, the first battery pack VCC1 and the second battery pack VCC2 may form a high voltage redundant circuit. When any one of the first battery pack VCC1 and the second battery pack VCC2 fails, power may be continuously supplied through the other battery pack, thus ensuring the operation of the vehicle. A positive electrode of the first battery pack VCC1 may be connected to the high voltage power grid through a main positive relay S2, and the negative electrode of the second battery pack VCC2 may be connected to the high voltage power grid through a main negative relay S3. Here, the low voltage power grid may be configured to supply power to at least one low voltage load, for example, supplying power to a first low voltage load 121, and the high voltage power grid may be configured to supply power to at least one high voltage load 131. Generally, a voltage above 1KV is called a high voltage, and a voltage below 1KV is called a low voltage.

From the above introduction, it is known that the power supply circuit may include not only the first battery pack VCC1 and the second battery pack VCC2, but also the controller 110. The controller 110 may include a first controller 111, a second controller 112, and a third controller 113. The first controller 111 may be a master controller (controller-Master), and the second controller 112 and the third controller 113 may be slave controllers.

Specifically, in an embodiment of the present invention, a first voltage may be obtained by sampling a voltage of the first battery pack VCC1 through the second controller 112, and a second voltage may be obtained by sampling a voltage of the second battery pack VCC2 through the third controller 113. The first controller 111 may receive voltage sampling signals from the second controller 112 and the third controller 113, i.e., receiving the first voltage and the second voltage. Based on this, the first controller 111 may analyze and compare the first voltage and the second voltage to obtain a comparison result. Based on this comparison result, the first controller may control the power output by a direct current (DC) converter.

In an embodiment of the present invention, the first voltage of the first battery pack VCC1 may be obtained, and the second voltage of the second battery pack VCC2 may be obtained. On this basis, a voltage difference between the first battery pack VCC1 and the second battery pack VCC2 is determined according to the first voltage of the first battery pack VCC1 and the second voltage of the second battery pack VCC2. Here, the first voltage of the first battery pack VCC1 may be a capacity or a remaining capacity of the first battery pack VCC1, and the second voltage of the second battery pack VCC2 may be a capacity or a remaining capacity of the second battery pack VCC2.

Here, the voltage difference between the first battery pack VCC1 and the second battery pack VCC2 may be an absolute difference between a first voltage U1 and a second voltage U2, that is, the voltage difference=|U1-U2|.

In an embodiment of the present invention, the DC converter may include a first DC converter DCDC1 and a second DC converter DCDC2 as shown in Fig. 2. The first DC converter DCDC1 may be a bidirectional DC converter, which may be configured to convert a high voltage DC power of the first battery pack VCC1 into a low-voltage DC power to be provided to the first low voltage load 121 in a low voltage power grid 1. The first DC converter DCDC1 has a first end, a second end, a third end, and a fourth end. The first end of the first DC converter DCDC1 is connected to the positive electrode of the first battery pack VCC1, the second end of the first DC converter DCDC1 is connected to the negative electrode of the first battery pack VCC1, the third end of the first DC converter DCDC1 is connected to the low voltage grid power 1, and the fourth end of the first DC converter DCDC1 is grounded.

In addition, the second DC converter DCDC2 may also be a bidirectional DC converter, which may be configured to convert a high voltage DC power of the second battery pack VCC2 into a low-voltage DC power to be provided to the second low voltage load 122 in a low voltage power grid 2. The second DC converter DCDC2 has a first end, a second end, a third end, and a fourth end. The first end of the second DC converter DCDC2 is connected to the positive electrode of the second battery pack VCC2, the second end of the second DC converter DCDC2 is connected to the negative electrode of the second battery pack VCC2, the third end of the second DC converter DCDC2 is connected to the low voltage grid power 2, and the fourth end of the second DC converter DCDC2 is grounded.

Since both the first DC converter DCDC1 and the second DC converter DCDC2 are bidirectional DC converters, they are capable of converting the high voltage DC power into the low-voltage DC power. Similarly, they can also convert the low-voltage DC power into the high voltage DC power, thus providing support for a subsequent electric quantity balance between the first battery pack VCC1 and the second battery pack VCC2, as well as providing support for a subsequent discharge of electric quantity from the first battery pack VCC1 to the second battery pack VCC2.

In some embodiments, the power supply circuit may further include an isolating switch S4. As shown in Fig. 2, the isolating switch S4 may be arranged between the first DC converter DCDC1 and the second DC converter DCDC2, and two ends of the isolating switch S4 are connected to the third end of the first DC converter DCDC1 and the third end of the second DC converter DCDC2, respectively. When the electric quantity of the first battery pack VCC1 is greater than the electric quantity of the second battery pack VCC2, the isolating switch S4 is closed, and the electric quantity discharged from the first battery pack VCC1 may be discharged to the second battery pack VCC2 through the isolating switch S4 to achieve the electric quantity balance between the first battery pack VCC1 and the second battery pack VCC2. A part of the electric quantity discharged from the first battery pack VCC1 is discharged to the low voltage power grid 1 without passing through the isolating switch S4, and another part of the discharged electric quantity is discharged to the low voltage power grid 2 through the isolating switch S4, so that it is also possible to discharge the more electric quantity in the first battery pack VCC1 than in the second battery pack VCC2, so as to achieve the electric quantity balance between the first battery pack VCC1 and the second battery pack VCC2.

Through the above technical solution, after the isolating switch S4 is closed, the first DC converter DCDC1 may discharge the more electric quantity in the first battery pack VCC1 than in the second battery pack VCC2 to the second battery pack VCC2 through the isolating switch S4. The first DC converter DCDC1 may also discharge the excess electric quantity in the first battery pack VCC1 to the low voltage power grid through the isolating switch S4, and then to the low voltage load through the low voltage power grid. The isolating switch S4 serves as an electric quantity transmission bridge between the first battery pack VCC1 and the second battery pack VCC2, as well as an electric quantity discharge bridge between the first battery pack VCC1 and the low voltage load, so that the excess electric quantity in the first battery pack VCC1 may be discharged through this bridge, and the electric quantity in the first battery pack VCC1 may gradually approach the electric quantity in the second battery pack VCC2, to allow the electric quantities in the first battery pack VCC1 and the second battery pack VCC2 to tend to be balanced. Based on the isolating switch S4, the discharge of the excess electric quantity in the first battery pack VCC1 may be achieved without the need for additional configuration and activation of the bidirectional DC converter, and thus the cost of the electric quantity balance is lower. That is, by using the isolating switch S4 as a balancing energy transfer channel, one of the two bidirectional DC converters steps down and the other steps up, so that the active balance between the battery packs can be achieved. In addition, the first DC converter DCDC1 and the second DC converter DCDC2 can achieve the passive balance between the battery packs by dynamically adjusting their outputs.

As shown in Fig. 2, the third end of the first DC converter DCDC1 may be connected to the low voltage power grid 1, and the third end of the first DC converter DCDC1 may also be connected to the low voltage power grid 2 through the isolating switch S4. In this way, after the first DC converter DCDC1 converts the high voltage DC power received from the first battery pack VCC1 into the low-voltage DC power, the first DC converter DCDC1 will also supply the low-voltage DC power to the low voltage power grid 1 and the low voltage power grid 2.

Similarly, the third end of the second DC converter DCDC2 may be connected to the low voltage power grid 2, and the third end of the second DC converter DCDC2 may also be connected to the low voltage power grid 1 through the isolating switch S4. In this way, after the second DC converter DCDC2 converts the high voltage DC power received from the second battery pack VCC2 into the low-voltage DC power, the second DC converter DCDC2 will also supply the low-voltage DC power to the low voltage power grid 1 and the low voltage power grid 2.

The power supply circuit may also supply power to a third low voltage load 123, and the third low voltage load 123 may be a low voltage load jointly supplied by the low voltage power grid 1 and the low voltage power grid 2. A first input end of the third low voltage load 123 may be connected to the low voltage power grid 1, a second input end of the third low voltage load 123 may be connected to the low voltage power grid 2, and an output end of the third low voltage load 123 is grounded. In this way, the low voltage power grid 1 may not only supply power to the first low voltage load 121, but also supply power to the third low voltage load 123, and the low voltage power grid 2 may not only supply power to the second low voltage load 122, but also supply power to the third low voltage load 123.

In summary, the first low voltage load 121 may be a type of low voltage load powered by the low voltage power grid 1, the second low voltage load 122 may be a type of low voltage load powered by the low voltage power grid 2, and the third low voltage load may be a type of low voltage load that is redundantly powered by both the low voltage power grid 1 and the low voltage power grid 2.

In an embodiment of the present invention, the first controller 111 may receive the voltage sampling signals from the second controller 112 and the third controller 113, and compare the two voltage sampling signals to obtain a comparison result. On this basis, according to the comparison result, the first controller 111 may send an enabling instruction to the first DC converter DCDC1 and/or the second DC converter DCDC2. After receiving the instruction, the first DC converter DCDC1 and/or the second DC converter DCDC2 determine whether to operate according to the instruction.

In this process, the second controller 112 may sample the voltage of the first battery pack VCC1, and the first DC converter DCDC1 may take power from the first battery pack VCC1. In some embodiments, the third controller 113 may sample the voltage of the second battery pack VCC2, and the second DC converter DCDC2 may take power from the second battery pack VCC2. In addition, the power supply circuit may further include a pre-charge relay S5 and a pre-charge resistor R.

In step S12, a target control strategy corresponding to the voltage difference is determined.

In some embodiments, after the voltage difference between the first battery pack and the second battery pack is obtained, an embodiment of the present invention may obtain the target control strategy corresponding to the voltage difference. That is, if the voltage difference belongs to different ranges, the corresponding target control strategy is also different.

Here, the target control strategy is mainly how to control the DC converter to output the corresponding power, so as to achieve the balance of the capabilities of different battery packs, that is, based on the target control strategy, how much power the first DC converter and the second DC converter output respectively can be controlled. How to specifically obtain the target control strategy corresponding to the voltage difference will be explained in detail in the following embodiments, and will not be repeated here.

In step S13, the DC converter of the power supply circuit is controlled to output the corresponding power according to the target control strategy.

In some embodiments, after the target control strategy is obtained, an embodiment of the present invention may control the DC converter to output the corresponding power based on the target control strategy. That is, if the target control strategy is different, the power output by the DC converter will also be different.

It should be noted that the output of the DC converter may be power or electric quantity, that is, an embodiment of the present invention may also control the electric quantity output by the DC converter according to the target control strategy. Since the power is proportional to the electric quantity, the embodiment of the present invention may control the output power of the DC converter, or may also control the output electric quantity of the DC converter.

By controlling the power output by the DC converter of the power supply circuit based on the target control strategy, the embodiment of the present invention can flexibly and effectively achieve the energy balance of the battery packs. Specifically, the voltage difference between the first battery pack and the second battery pack is obtained. Based on this, the target control strategy corresponding to the voltage difference is determined, and the DC converter of the power supply circuit is controlled to output the corresponding power according to the target control strategy. In this way, the balance problem of high voltage battery pack grouping may be solved.

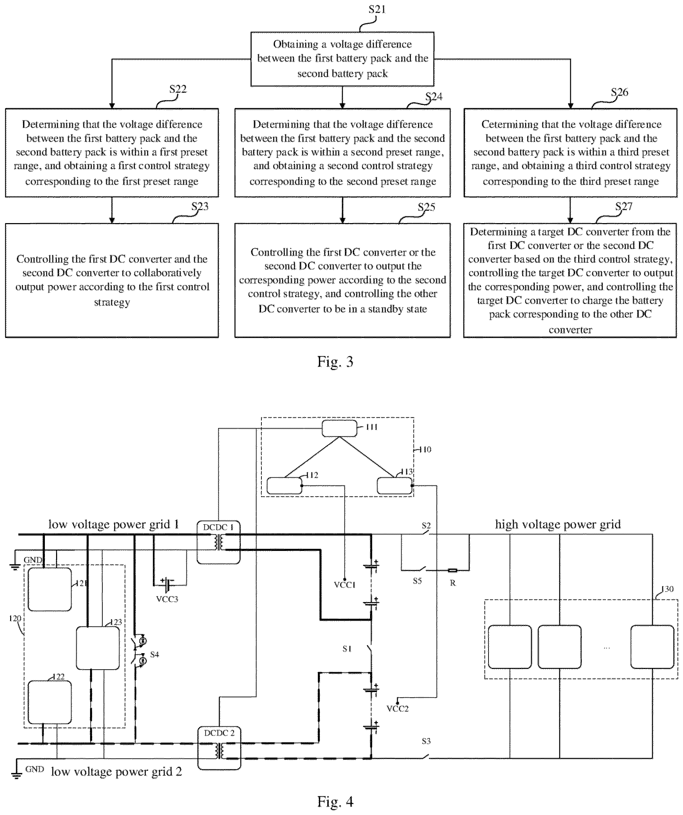

Fig. 3 is a flow chart of another control method for a power supply circuit according to an illustrative embodiment. As shown in Fig. 3, the method may include the following steps.

In step S21, a voltage difference between a first battery pack and a second battery pack is obtained.

The specific implementation of step S21 has been described in detail in the above embodiments, which will not be repeated here.

In step S22, it is determined that the voltage difference between the first battery pack and the second battery pack is within a first preset range, and a first control strategy corresponding to the first preset range is obtained.

In some embodiments, after the first voltage of the first battery pack and the second voltage of the second battery pack and obtained, an embodiment of the present invention may first determine whether the first voltage and the second voltage are equal. If it is determined that the first voltage and the second voltage are equal, it indicates that the electric quantities between the first battery pack and the second battery pack is balanced. Otherwise, if it is determined that the first voltage and the second voltage are not equal, it indicates that the electric quantities between the first battery and the second battery is unbalanced. At this time, the voltage difference between the first battery and the second battery may be obtained.

On this basis, it is determined whether the voltage difference between the first battery pack and the second battery pack is within the first preset range. If it is determined that the voltage difference between the first battery pack and the second battery pack is within the first preset range, the embodiments of the present invention may obtain the first control strategy corresponding to the first preset range. At this time, the first control strategy may be to control the first DC converter and the second DC converter to collaboratively allocate the low voltage energy output power, that is, to control the first DC converter and the second DC converter to output a certain amount of electric quantities, respectively.

For example, the first preset range may be 1V-2V. If it is determined that the voltage difference ΔU=|U1-U2| between the first battery pack and the second battery pack satisfies 1V<ΔU≤2V, the first DC converter and the second DC converter are controlled to collaboratively output power according to the first control strategy, that is, step S23 is entered.

In step S23, the first DC converter and the second DC converter are controlled to collaboratively output power according to the first control strategy.

In some embodiments, when the voltage difference between the first battery pack and the second battery pack is determined to be within the first preset range, an embodiment of the present invention may control the first DC converter and the second DC converter to collaboratively output power according to the first control strategy corresponding to the first preset range, as shown in Fig. 4. A bold black line in Fig. 4 is an example of supplying power to the low voltage load through the first battery pack, and a bold dashed line is an example of supplying power to the low voltage load through the second battery pack.

In this process, embodiments of the present invention may determine whether the first voltage of the first battery pack is greater than the second voltage of the second battery pack. If it is determined that the first voltage of the first battery pack is greater than the second voltage of the second battery pack, and the voltage difference between the first voltage and the second voltage (i.e. the voltage difference between the first battery pack and the second battery pack) is within the first preset range, embodiments of the present invention may control the first DC converter to output a first power and control the second DC converter to output a second power. The first power output by the first DC converter may be greater than the second power output by the second DC converter. A sum of the first power and the second power may be a target power required by the low voltage load.

Here, a first power supply ratio between the first power and the target power may be greater than a second power supply ratio between the second power and the target power.

As shown in Fig. 4, the power output from the low voltage power grid 1 may be transmitted to the first low voltage load 121 and the third low voltage load 123, and the power output from the low voltage power grid 2 may be transmitted to the second low voltage load 122 and the third low voltage load 123. Therefore, the total power required by the first low voltage load 121, the second low voltage load 122, and the third low voltage load 123 is the target power required by the low voltage load.

As an example, the target power is 200W, the first power supply ratio is 70% and the second power supply ratio is 30%. The first DC converter DCDC1 will convert a low voltage DC power of 140W to be supplied to the low voltage power grid 1 after receiving the high voltage DC power output from the first battery pack VCC1, and the second DC converter DCDC2 will convert a low voltage DC power of 60W to be supplied to the low voltage power grid 2 after receiving the high voltage DC power output from the second battery pack VCC2, thus meeting a total power of 200W required by the first low voltage load 121 to the third low voltage load 123.

In some embodiments, in addition, the first power supply ratio may also be a ratio between a first electric quantity output by the first DC converter and a target electric quantity required by the low voltage load, and the second power supply ratio may be a ratio between a second electric quantity output by the second DC converter and the target electric quantity required by the low voltage load.

Of course, the first power supply ratio and the second power supply ratio mentioned above may vary according to the actual situation, and the present invention does not limit this.

In addition, in a scenario where the voltage difference is within the first preset range and the first voltage is greater than the second voltage, an embodiment of the present invention may change a value of the first power supply ratio according to the voltage difference between the first battery pack VCC1 and the second battery pack VCC2. As the voltage difference increases, the first power supply ratio increases and the corresponding second power supply ratio decreases, that is, the larger the voltage difference, the larger the first power and the smaller the corresponding second power. In this way, when the first battery pack VCC1 has more electric quantities, the first battery pack VCC1 may supply more electric quantities to the low voltage power grid 1 and the low voltage power grid 2, while the second battery pack VCC2 supplies less electric quantities, thus more quickly balancing the electric quantities of the first battery pack VCC1 and the second battery pack VCC2.

In some embodiments, if it is determined that the first voltage of the first battery pack is less than the second voltage of the second battery pack, and the voltage difference between the first voltage and the second voltage is within the first preset range, an embodiment of the present invention may control the first DC converter to output the first power and control the second DC converter to output the second power. The first power output by the first DC converter may be less than the second power output by the second DC converter. The sum of the first power and the second power may be the target power required by the low voltage load.

Here, the first power supply ratio between the first power and the target power may be less than the second power supply ratio between the second power and the target power.

As an example, the target power is 200W, the first power supply ratio is 30% and the second power supply ratio is 70%. The first DC converter DCDC1 will convert a low voltage DC power of 60W to be supplied to the low voltage power grid 1 after receiving the high voltage DC power output from the first battery pack VCC1, and the second DC converter DCDC2 will convert a low voltage DC power of 140W to be supplied to the low voltage power grid 2 after receiving the high voltage DC power output from the second battery pack VCC2, thus meeting a total power of 200W required by the first low voltage load 121 to the third low voltage load 123.

In addition, in a scenario where the voltage difference is within the first preset range and the first voltage is less than the second voltage, an embodiment of the present invention may change a value of the first power supply ratio according to the voltage difference between the first battery pack VCC1 and the second battery pack VCC2. As the voltage difference increases, the first power supply ratio decreases and the corresponding second power supply ratio increases, that is, the larger the voltage difference, the smaller the first power and the larger the corresponding second power. In this way, when the second battery pack VCC2 has more electric quantities, the second battery pack VCC2 may supply more electric quantities to the low voltage power grid 1 and the low voltage power grid 2, while the first battery pack VCC1 supplies less electric quantities, thus more quickly balancing the electric quantities of the first battery pack VCC1 and the second battery pack VCC2.

It should be noted that the output power of the first DC converter and the second DC converter is different in the process of the first DC converter and the second DC converter collaboratively outputting power according to working instructions sent by the controller. In this process, the controller may monitor the voltage difference between the first battery pack and the second battery pack. When the voltage difference therebetween is monitored to be less than a preset range, that is, the first voltage is approximately equal to the second voltage, the controller may control the first DC converter and the second DC converter to work simultaneously at the same low voltage energy output power.

As a specific embodiment, the first controller 111 receives the voltage sampling signals transmitted by the second controller 112 and the third controller 113, and determines that 1V<|U1-U2|≤2V through comparison. At this time, the first controller 111 may send a "work" enabling instruction to the first DC converter DCDC1 and the second DC converter DCDC2. After receiving the "work" instruction, the first DC converter DCDC1 and the second DC converter DCDC2 may take power from the first battery pack VCC1 and the second battery pack VCC2, respectively.

In this process, the first DC converter DCDC1 and the second DC converter DCDC2 may collaboratively allocate the low voltage energy output power within a range of 0-100% respectively according to the unbalanced electric quantities between the first battery pack VCC1 and the second battery pack VCC2. Until it is determined that the voltage sampling signals transmitted by the second controller 112 and the third controller 113 are equal, the first controller 111 may instruct the first DC converter DCDC1 and the second DC converter DCDC2 to restore to work simultaneously at the same low voltage energy output power.

In step S24, it is determined that the voltage difference between the first battery pack and the second battery pack is within a second preset range, and a second control strategy corresponding to the second preset range is obtained.

In some embodiments, if it is determined that the voltage difference between the first battery pack and the second battery pack is within the second preset range, an embodiment of the present invention may obtain the second control strategy corresponding to the second preset range. At this time, the second control strategy may be to control the first DC converter or the second DC converter to output the corresponding power, and to control the other DC converter to be in a standby state, that is, to control one of the first DC converter and the second DC converter to output the corresponding power, while the other DC converter may stop outputting power.

Here, the second preset range may be greater than the first preset range, for example, the second preset range may be 2V-4V. If it is determined that the voltage difference ΔU=|U1-U2| between the first battery pack and the second battery pack satisfies 2V<ΔU≤4V, the first DC converter or the second DC converter may be controlled to output the corresponding power according to the second control strategy, and the other DC converter may enter the standby state, that is, step S25 is entered.

In step S25, the first DC converter or the second DC converter is controlled to output the corresponding power according to the second control strategy, and the other DC converter is controlled to be in the standby state.

In some embodiments, when the voltage difference between the first battery pack and the second battery pack is determined to be within the second preset range, an embodiment of the present invention may control the first DC converter or the second DC converter to output power according to the second control strategy corresponding to the second preset range, while the other DC converter stops outputting power.

In this process, an embodiment of the present invention may determine whether the first voltage of the first battery pack is greater than the second voltage of the second battery pack. If it is determined that the first voltage of the first battery pack is greater than the second voltage of the second battery pack, and the voltage difference between the first voltage and the second voltage is within the second preset range, an embodiment of the present invention may control the first DC converter to output all the power required by the low voltage load, and control the second DC converter to enter the standby state. At this time, the power output by the second DC converter is zero.

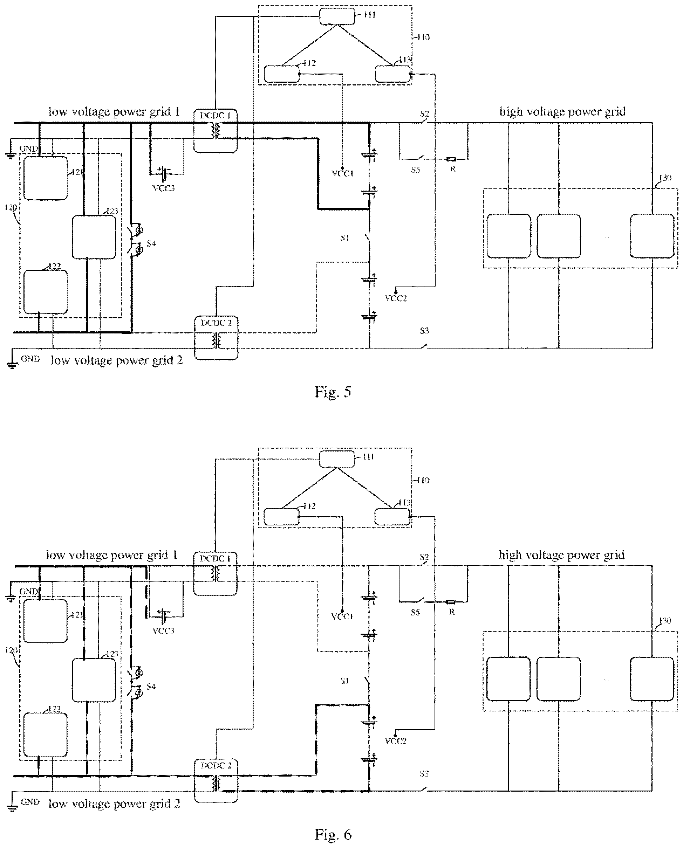

Here, the first power supply ratio between the first power and the target power may be 100%, while the second power supply ratio between the second power and the target power may be 0%. A specific current flow direction may be shown in Fig. 5. It can be seen from Fig. 5 that the electric quantities of all loads in the power supply circuit may be provided by the first battery pack at this time.

As an example, the target power is 200W, the first power supply ratio is 100% and the second power supply ratio is 0%. After receiving the high voltage DC power output from the first battery pack VCC1, the first DC converter DCDC1 will convert a low voltage DC power of 200W to be supplied to the low voltage power grid 1 and the low voltage power grid 2, while the second DC converter DCDC2 does not output power, thus meeting a total power of 200W required by the first low voltage load 121 to the third low voltage load 123.

In some embodiments, if it is determined that the first voltage of the first battery pack is less than the second voltage of the second battery pack, and the voltage difference between the first voltage and the second voltage is within the second preset range, an embodiment of the present invention may control the second DC converter to output all the power required by the low voltage load, and control the first DC converter to enter the standby state. At this time, the power output by the first DC converter is zero.

Here, the first power supply ratio between the first power and the target power may be 0%, while the second power supply ratio between the second power and the target power may be 100%. A specific current flow direction may be shown in Fig. 6. It can be seen from Fig. 6 that the electric quantities of all loads in the power supply circuit may be provided by the second battery pack at this time.

As an example, the target power is 200W, the first power supply ratio is 0% and the second power supply ratio is 100%. After receiving the high voltage DC power output from the second battery pack VCC2, the second DC converter DCDC2 will convert a low voltage DC power of 200W to be supplied to the low voltage power grid 1 and the low voltage power grid 2, while the first DC converter DCDC1 does not output power, thus meeting a total power of 200W required by the first low voltage load 121 to the third low voltage load 123.

It should be noted that in this process, the controller may monitor the voltage difference between the first battery pack and the second battery pack. When the voltage difference therebetween is monitored to be less than a preset range, that is, the first voltage is approximately equal to the second voltage, the controller may control the first DC converter and the second DC converter to work simultaneously at the same low voltage energy output power. For example, if the voltage difference between the first voltage and the second voltage is determined to be less than 1 V, it means that the voltage difference is less than the preset range, and the first voltage and the second voltage are approximately equal.

As a specific embodiment, the first controller 111 receives the voltage sampling signals transmitted by the second controller 112 and the third controller 113, and determines that 2V<U1-U2≤4V through comparison. At this time, the first controller 111 may send a "work" enabling instruction to the first DC converter DCDC1. After receiving the "work" instruction, the first DC converter DCDC1 may take power from the first battery pack VCC1.

In this process, the first DC converter DCDC1 may output power according to the demand of the low voltage load end, as shown in detail in Fig. 5. Until it is determined that the voltage sampling signals transmitted by the second controller 112 and the third controller 113 are equal, the first controller 111 may send a "work" enabling instruction to the second DC converter DCDC2. Here, the second DC converter DCDC2 may take power from the second battery pack VCC2 after receiving the "work" instruction. That is, the first DC converter DCDC1 and the second DC converter DCDC2 restore to work simultaneously at the same low voltage energy output power.

As a specific embodiment, the first controller 111 receives the voltage sampling signals transmitted by the second controller 112 and the third controller 113, and determines that 2V<U2-U1≤4V through comparison. At this time, the first controller 111 may send a "work" enabling instruction to the second DC converter DCDC2. After receiving the "work" instruction, the second DC converter DCDC2 may take power from the second battery pack VCC2.

In this process, the second DC converter DCDC2 may output power according to the demand of the low voltage load end, as shown in detail in Fig. 6. Until it is determined that the voltage sampling signals transmitted by the second controller 112 and the third controller 113 are equal, the first controller 111 may send a "work" enabling instruction to the first DC converter DCDC1. Here, the first DC converter DCDC1 may take power from the first battery pack VCC1 after receiving the "work" instruction. That is, the first DC converter DCDC1 and the second DC converter DCDC2 restore to work simultaneously at the same low voltage energy output power.

In step S26, it is determined that the voltage difference between the first battery pack and the second battery pack is within a third preset range, and a third control strategy corresponding to the third preset range is obtained.

In some embodiments, if it is determined that the voltage difference between the first battery pack and the second battery pack is within the third preset range, an embodiment of the present invention may obtain the third control strategy corresponding to the third preset range. At this time, the third control strategy may be to control a DC converter corresponding to a high voltage side to supply power to all low voltage load ends, and to control a battery pack with a high voltage to charge a battery pack with a low voltage.

Here, the third preset range may be greater than the second preset range, for example, the third preset range may be 4V-6V. If it is determined that the voltage difference ΔU=|U1-U2| between the first battery pack and the second battery pack satisfies 4V < ΔU≤6V, a target DC converter is determined from the first DC converter or the second DC converter based on the third control strategy, a voltage on the target DC converter side is higher than the voltage of the other DC converter, and the target DC converter is controlled to output the corresponding power and to charge a battery pack corresponding to the other DC converter, that is, step S27 is entered.

In step S27, based on the third control strategy, the target DC converter is determined from the first DC converter or the second DC converter, and the target DC converter is controlled to output the corresponding power and to charge the battery pack corresponding to the other DC converter.

In some embodiments, when the voltage difference between the first battery pack and the second battery pack is determined to be within the third preset range, an embodiment of the present invention may determine the target DC converter from the first DC converter or the second DC converter based on the third control strategy, control the target DC converter to output the corresponding power, and control the target DC converter to charge the battery pack corresponding to the other DC converter.

In this process, an embodiment of the present invention may determine whether the first voltage of the first battery pack is greater than the second voltage of the second battery pack. If it is determined that the first voltage of the first battery pack is greater than the second voltage of the second battery pack, and the voltage difference between the first voltage and the second voltage is within the third preset range, the first DC converter may serve as the target DC converter. On this basis, the first DC converter is controlled to output all the power required by the low voltage load, and the first DC converter is controlled to charge the second battery pack corresponding to the second DC converter.

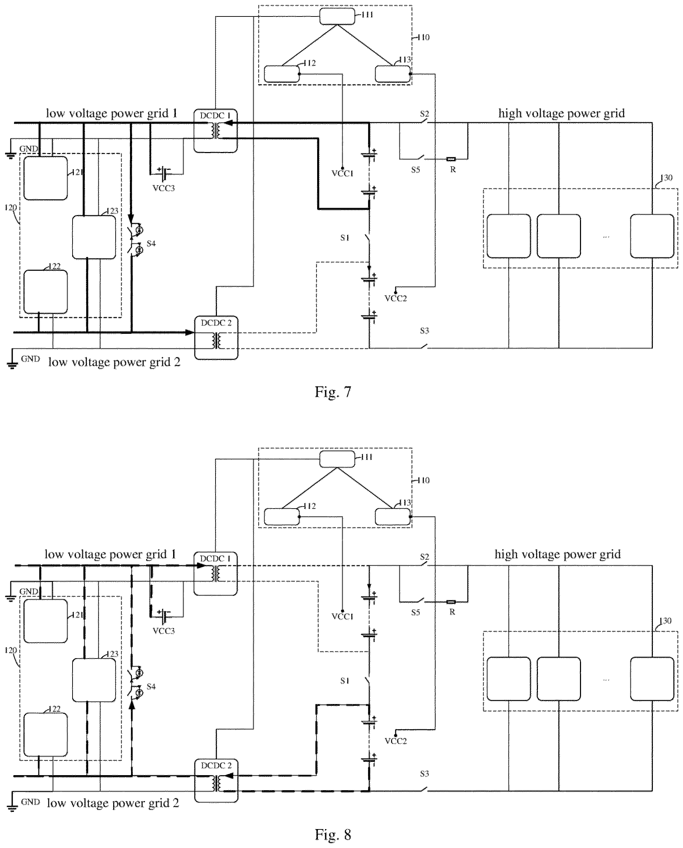

At this time, a current flow direction of the power supply circuit may be shown in Fig. 7. It can be seen from Fig. 7 that when the voltage difference between the first voltage of the first battery pack and the second voltage of the second battery pack is within the third preset range, and the first voltage is greater than the second voltage, the first battery pack may not only supply power to the low voltage load through the first DC converter, but also charge the second battery pack through the first DC converter.

In some embodiments, if it is determined that the first voltage of the first battery pack is less than the second voltage of the second battery pack, and the voltage difference between the first voltage and the second voltage is within the third preset range, the second DC converter may serve as the target DC converter. On this basis, the second DC converter is controlled to output all the power required by the low voltage load, and the second DC converter is controlled to charge the first battery pack corresponding to the first DC converter.

At this time, a current flow direction of the power supply circuit may be shown in Fig. 8. It can be seen from Fig. 8 that when the voltage difference between the first voltage of the first battery pack and the second voltage of the second battery pack is within the third preset range, and the first voltage is less than the second voltage, the second battery pack may not only supply power to the low voltage load through the second DC converter, but also charge the first battery pack through the second DC converter.

It should be noted that in this process, the controller may monitor the voltage difference between the first battery pack and the second battery pack. When the voltage difference therebetween is monitored to be less than a preset range, that is, the first voltage is approximately equal to the second voltage, the controller may control the first DC converter and the second DC converter to work simultaneously at the same low voltage energy output power. For example, if the voltage difference between the first voltage and the second voltage is determined to be less than 1V, it means that the voltage difference is less than the preset range, and the first voltage and the second voltage are approximately equal.

As a specific embodiment, the first controller 111 receives the voltage sampling signals transmitted by the second controller 112 and the third controller 113, and determines that 4V<U1-U2≤ 6V through comparison. At this time, the first controller 111 may send a "work" enabling instruction to the first DC converter DCDC1. After receiving the "work" instruction, the first DC converter DCDC1 may take power from the first battery pack VCC1.

In this process, the first DC converter DCDC1 may output power according to the demand of the low voltage load end, and at the same time, the first DC converter DCDC1 may charge the second battery pack, as shown in detail in Fig. 7. Until it is determined that the voltage sampling signals transmitted by the second controller 112 and the third controller 113 are equal, the first controller 111 may send a "work" enabling instruction to the second DC converter DCDC2. Here, the second DC converter DCDC2 may take power from the second battery pack VCC2 after receiving the "work" instruction. That is, the first DC converter DCDC1 and the second DC converter DCDC2 restore to work simultaneously at the same low voltage energy output power.

As a specific embodiment, the first controller 111 receives the voltage sampling signals transmitted by the second controller 112 and the third controller 113, and determines that 4V<U2-U1≤ 6V through comparison. At this time, the first controller 111 may send a "work" enabling instruction to the second DC converter DCDC2. After receiving the "work" instruction, the second DC converter DCDC2 may take power from the second battery pack VCC2.

In this process, the second DC converter DCDC2 may output power according to the demand of the low voltage load end, and at the same time, the second DC converter DCDC2 may charge the first battery pack, as shown in detail in Fig. 8. Until it is determined that the voltage sampling signals transmitted by the second controller 112 and the third controller 113 are equal, the first controller 111 may send a "work" enabling instruction to the first DC converter DCDC1. Here, the first DC converter DCDC1 may take power from the first battery pack VCC1 after receiving the "work" instruction. That is, the first DC converter DCDC1 and the second DC converter DCDC2 restore to work simultaneously at the same low voltage energy output power.

In embodiments of the present invention, a process of step S22 to step S25 may be referred to as the passive balance of the battery packs. As described above, the passive balance may be that the first DC converter DCDC1 and the second DC converter DCDC2 dynamically adjust their outputs to achieve the passive balance of the battery packs. In the process of the passive balance, the first DC converter DCDC1 and the second DC converter DCDC2 may collaboratively allocate the low voltage energy output between 0%-100% as needed, respectively, to consume more the battery pack with a high voltage/a high SOC (State of Charge), avoiding a significant voltage difference/SOC difference between the first battery pack and the second battery pack.

In addition, a process of step S26 to step S27 may be referred to as the active balance of the battery packs. The isolating switch serves as the balancing energy transfer channel, and one of the first DC converter DCDC1 and the second DC converter DCDC2 steps down and the other steps up, which can achieve the active balance between the battery packs. In the process of the active balance, the DC converter connected to the high voltage battery pack with the high voltage/SOC may operate in a Buck mode to convert energy from the high voltage to the low voltage power grid, while another DC converter may operate in a Boost mode to convert energy from the low voltage to the high voltage battery pack with the low voltage/SOC connected this DC converter, so that the active balance of the voltage/SOC between the high voltage battery packs may be achieved. In this process, the isolating switch acts as an energy transfer channel between the two low voltage power grids.

By controlling the output power of the DC converter of the power supply circuit based on the target control strategy, embodiments of the present invention can flexibly and effectively achieve the energy balance of the battery packs. Specifically, the voltage difference between the first battery pack and the second battery pack is obtained. Based on this, the target control strategy corresponding to the voltage difference is determined, and the DC converter of the power supply circuit is controlled to output the corresponding power according to the target control strategy. In this way, the balance problem of high voltage battery pack grouping can be solved, that is, embodiments of the present invention can solve the problem that the electric quantity/voltage/SOC in the high voltage battery pack grouping cannot be balanced.

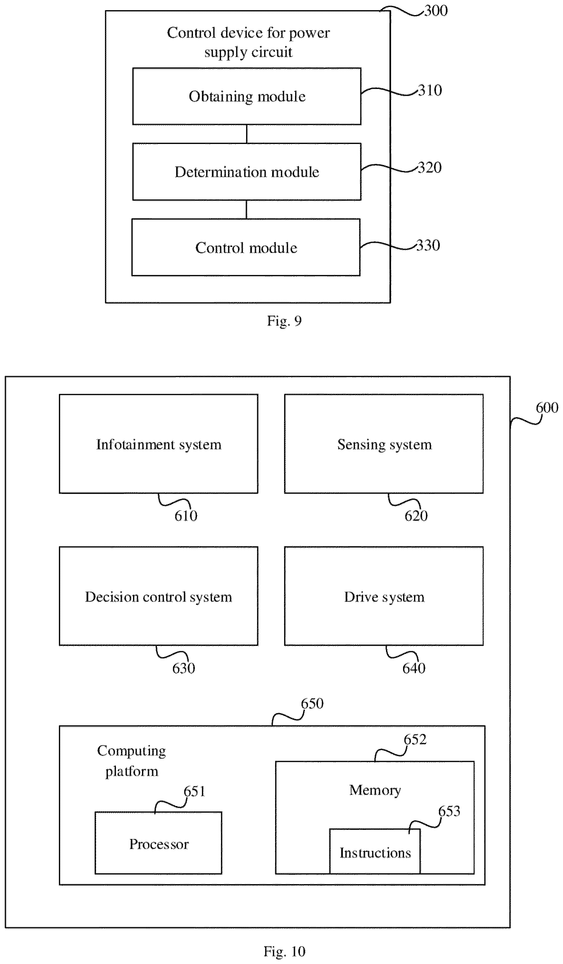

Fig. 9 is a block diagram of a control device for a power supply circuit according to an illustrative embodiment, in which the power supply circuit includes a first battery pack, a second battery pack, a first switch group, a second switch group, and a first DC converter. Referring to Fig. 9, a control device 300 for the power supply circuit includes an obtaining module 310, a determination module 320, and a control module 330.

The obtaining module 310 is configured to obtain a voltage difference between a first battery pack and a second battery pack of the power supply circuit.

The determination module 320 is configured to determine a target control strategy corresponding to the voltage difference.

The control module 330 is configured to control a DC converter of the power supply circuit to output a corresponding power according to the target control strategy, and the DC converter including a first DC converter and a second DC converter.

In some embodiments, the power supply circuit includes the first DC converter and the second DC converter, and the determination module 320 may include: a first determination submodule configured to determine that the voltage difference between the first battery pack and the second battery pack is within a first preset range, and to obtain a first control strategy corresponding to the first preset range; and the control module 330 may include: a first control submodule configured to control the first DC converter and the second DC converter to collaboratively output power according to the first control strategy.

In some embodiments, the first control submodule is further configured to control the first DC converter to output a first power and control the second DC converter to output a second power when a voltage of the first battery pack is greater than a voltage of the second battery pack, and the first power is greater than the second power; or, the first control submodule is further configured to control the first DC converter to output a first power and control the second DC converter to output a second power when a voltage of the first battery pack is less than a voltage of the second battery pack, and the first power is less than the second power.

In some embodiments, the determination module 320 may further include: a second determination submodule configured to determine that the voltage difference between the first battery pack and the second battery pack is within a second preset range, and to obtain a second control strategy corresponding to the second preset range, the second preset range being greater than the first preset range; and the control module 330 may further include: a second control submodule configured to control the first DC converter or the second DC converter to output the corresponding power according to the second control strategy, and to control the other DC converter to be in a standby state.

In some embodiments, the second control submodule is further configured to determine that the first voltage of the first battery pack is greater than the second voltage of the second battery pack and that the voltage difference between the first voltage and the second voltage is within the second preset range, to control the first DC converter to output the corresponding power, and to control the second DC converter to be in the standby state; or, the second control submodule is further configured to determine that the first voltage of the first battery pack is less than the second voltage of the second battery pack and the voltage difference between the first voltage and the second voltage is within the second preset range, to control the second DC converter to output the corresponding power, and to control the first DC converter to be in the standby state.

In some embodiments, the determination module 320 may further include: a third determination submodule configured to determine that the voltage difference between the first battery pack and the second battery pack is within a third preset range, and to obtain a third control strategy corresponding to the third preset range, the third preset range being greater than the second preset range; and the control module 330 may further include: a third control submodule configured to determine a target DC converter from the first DC converter or the second DC converter based on the third control strategy, to control the target DC converter to output the corresponding power, and to control the target DC converter to charge the battery pack corresponding to the other DC converter.

In some embodiments, the third control submodule is further configured to determine that the first voltage of the first battery pack is greater than the second voltage of the second battery pack, and that the voltage difference between the first voltage and the second voltage is within the third preset range, to use the first DC converter as the target DC converter, to control the first DC converter to output the corresponding power, and to control the first DC converter to charge the second battery pack corresponding to the second DC converter; or, the third control submodule is further configured to determine that the first voltage of the first battery pack is less than the second voltage of the second battery pack, and that the voltage difference between the first voltage and the second voltage is within the third preset range, to use the second DC converter as the target DC converter, to control the second DC converter to output the corresponding power, and to control the second DC converter to charge the first battery pack corresponding to the first DC converter.

By controlling the power output by the DC converter of the power supply circuit based on the target control strategy, embodiments of the present invention can flexibly and effectively achieve the energy balance of the battery packs. Specifically, the voltage difference between the first battery pack and the second battery pack is obtained. Based on this, the target control strategy corresponding to the voltage difference is determined, and the DC converter of the power supply circuit is controlled to output the corresponding power according to the target control strategy. In this way, the balance problem of high voltage battery pack grouping can be solved.

With regards to the device in the above embodiments, the specific way in which each module performs the operation has been described in the embodiments of the method and will not be elaborated here.

The present invention further provides a computer readable storage medium, on which computer program instructions are stored, which are configured to, when executed by a processor, implement the steps of the control method for the power supply circuit according to the present invention.

Fig. 10 is a block diagram of a vehicle 600 according to an illustrative embodiment. For example, the vehicle 600 may be a hybrid vehicle, a non-hybrid vehicle, an electric vehicle, a fuel cell vehicle, or other types of vehicles. The vehicle 600 may be an autonomous vehicle, a semi-autonomous vehicle, or a non-autonomous vehicle.

Referring to Fig. 10, the vehicle 600 may include various subsystems, such as an infotainment system 610, a sensing system 620, a decision control system 630, a drive system 640, and a computing platform 650. The vehicle 600 may also include more or fewer subsystems, and each subsystem may include a plurality of parts. In addition, each subsystem and each part of the vehicle 600 may be interconnected in a wired or wireless manner.

In some embodiments, the infotainment system 610 may include a communication system, an entertainment system, a navigation system, and so on.

The sensing system 620 may include several types of sensors for sensing information about the environment surrounding the vehicle 600. For example, the sensing system 620 may include a global positioning system (which may be a GPS system, a Beidou system, or other positioning systems), an inertial measurement unit (IMU), a laser radar, a millimeter wave radar, an ultrasonic radar, and a camera device.

The decision control system 630 may include a computing system, a vehicle controller, a steering system, an accelerator, and a braking system.

The drive system 640 may include components that provide power movements for the vehicle 600. In an embodiment, the drive system 640 may include an engine, an energy source, a transmission system, and wheels. The engine may be one or a combination of an internal combustion engine, an electric motor, or an air compression engine. The engine may convert the energy provided by the energy source into mechanical energy.

Part or all of the functions of the vehicle 600 are controlled by the computing platform 650. The computing platform 650 may include at least one processor 651 and a memory 652, and the processor 651 may execute the instructions 653 stored in the memory 652.

The processor 651 may be any conventional processor, such as a commercially available CPU. The processor may also include such as a graphic process unit (GPU), a field programmable gate array (FPGA), a system on chip (SOC), an application specific integrated circuit (ASIC), or a combination thereof.

The memory 652 may be implemented with any types of volatile or non-volatile memory device, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a disk, or an optical disk.

In addition to the instructions 653, the memory 652 may also store data such as road maps, route information, a location, a direction and a speed of the vehicle, and other data. The data stored in the memory 652 may be used by the computing platform 650.

In an embodiment of the present invention, the processor 651 may execute the instructions 653 to complete all or part of the steps of the control method for the power supply circuit described above.

In another illustrative embodiment, a computer program product is further provided. The computer program product includes computer programs that can be executed by a programmable device, and the computer program has a code portion configured to execute the above control method for the power supply circuit when executed by the programmable device.

After considering the specification and practicing the present invention herein, those skilled in the art will easily think of other implementations. This present application is intended to cover any variations, uses, or adaptations of the present invention following the general principles of the present invention and including such departures from the present invention as come within the known or customary practice in the art.

## Claims

1. A control method for a power supply circuit, wherein the power supply circuit comprises a first battery pack and a second battery pack, and the method comprises:
obtaining (S11, S21) a voltage difference between the first battery pack and the second battery pack;
determining (S12) a target control strategy corresponding to the voltage difference; and
controlling (S13) a direct current, DC, converter of the power supply circuit to output a corresponding power according to the target control strategy.

2. The control method for the power supply circuit according to claim 1, wherein the DC converter comprises a first DC converter and a second DC converter, and determining (S12) the target control strategy corresponding to the voltage difference comprises:
determining (S22) that the voltage difference between the first battery pack and the second battery pack is within a first preset range, and obtaining a first control strategy corresponding to the first preset range; and
controlling the DC converter of the power supply circuit to output the corresponding power according to the target control strategy comprises:
controlling (S23) the first DC converter and the second DC converter to collaboratively output power according to the first control strategy.

3. The control method for the power supply circuit according to claim 2, wherein controlling (S23) the first DC converter and the second DC converter to collaboratively output power according to the first control strategy comprises:
in case that a first voltage of the first battery pack is greater than a second voltage of the second battery pack, controlling the first DC converter to output a first power and controlling the second DC converter to output a second power, wherein the first power is greater than the second power; or
in case that a first voltage of the first battery pack is less than a second voltage of the second battery pack, controlling the first DC converter to output a first power and controlling the second DC converter to output a second power, wherein the first power is less than the second power.

4. The control method for the power supply circuit according to any one of claims 1-3, wherein the DC converter comprises a first DC converter and a second DC converter, and determining (S12) the target control strategy corresponding to the voltage difference comprises:
determining (S24) that the voltage difference between the first battery pack and the second battery pack is within a second preset range, and obtaining a second control strategy corresponding to the second preset range, wherein the second preset range is greater than the first preset range; and
controlling the DC converter of the power supply circuit to output the corresponding power according to the target control strategy comprises:
controlling (S25) one of the first DC converter and the second DC converter to output the corresponding power according to the second control strategy, and controlling the other one of the first DC converter and the second DC converter to be in a standby state.

5. The control method for the power supply circuit according to claim 4, wherein controlling the one of the first DC converter and the second DC converter to output the corresponding power according to the second control strategy, and controlling the other one of the first DC converter and the second DC converter to be in the standby state comprises:
determining that a first voltage of the first battery pack is greater than a second voltage of the second battery pack and that the voltage difference between the first battery pack and the second battery pack is within the second preset range, controlling the first DC converter to output the corresponding power, and controlling the second DC converter to be in the standby state; or
determining that a first voltage of the first battery pack is less than a second voltage of the second battery pack and that the voltage difference between the first battery pack and the second battery pack is within the second preset range, controlling the second DC converter to output the corresponding power, and controlling the first DC converter to be in the standby state.

6. The control method for the power supply circuit according to any one of claims 1-5, wherein the DC converter comprises a first DC converter and a second DC converter, and determining (S12) the target control strategy corresponding to the voltage difference comprises:
determining (S26) that the voltage difference between the first battery pack and the second battery pack is within a third preset range, and obtaining a third control strategy corresponding to the third preset range, wherein the third preset range is greater than the second preset range; and
controlling the DC converter of the power supply circuit to output the corresponding power according to the target control strategy comprises:
determining (S27) a target DC converter from one of the first DC converter and the second DC converter based on the third control strategy, controlling the target DC converter to output the corresponding power, and controlling the target DC converter to charge the first battery pack or the second battery pack corresponding to the other one of the first DC converter and the second DC converter.

7. The control method for the power supply circuit according to claim 6, wherein determining the target DC converter from the one of the first DC converter and the second DC converter based on the third control strategy, controlling the target DC converter to output the corresponding power, and controlling the target DC converter to charge the first battery pack or the second battery pack corresponding to the other one of the first DC converter and the second DC converter, comprises:
determining that a first voltage of the first battery pack is greater than a second voltage of the second battery pack, and that the voltage difference between the first battery pack and the second battery pack is within the third preset range, using the first DC converter as the target DC converter, controlling the first DC converter to output the corresponding power, and controlling the first DC converter to charge the second battery pack corresponding to the second DC converter; or
determining that a first voltage of the first battery pack is less than a second voltage of the second battery pack, and that the voltage difference between the first battery pack and the second battery pack is within the third preset range, using the second DC converter as the target DC converter, controlling the second DC converter to output the corresponding power, and controlling the second DC converter to charge the first battery pack corresponding to the first DC converter.

8. A vehicle (600), comprising:
a processor (651); and
a memory (652) for storing instructions (653) executable by the processor (651),
wherein the processor (651) is configured to execute the instructions (653) to perform a method according to any one of claims 1-7.

9. A computer readable storage medium, on which computer program instructions are stored, which are configured to, when executed by a processor, implement the steps of a method according to any one of claims 1-7.

10. A computer program product, comprising computer programs/instructions, wherein the computer programs/instructions are configured to, when executed by a processor, implement the steps of a method according to any one of claims 1-7.
